# EUROPEAN PATENT SPECIFICATION

(11) **EP 4 415 533 B1**
(45) Date of publication and mention of the grant of the patent: **18.02.2026**
(21) Application number: 22789698.2
(22) Date of filing: 10.10.2022
(51) Int. Cl.: A01K 15/02, A61H 3/00, A63B 22/02, A63B 21/00

(54) **DEVICE FOR THE TREATMENT OF THE MOBILITY OF QUADRUPEDS**
VORRICHTUNG ZUR BEHANDLUNG DER MOBILITÄT VON VIERBEINERN
DISPOSITIF POUR LE TRAITEMENT DE LA MOBILITÉ DE QUADRUPÈDES

(30) Priority: 13.10.2021 IT 202100026174
(43) Date of publication of application: 21.08.2024
(73) Proprietor: Tekno Idea S.r.l., 65128 Pescara (PE) (IT)
(72) Inventor: DI GIROLAMO, Alessandro, 65015 Montesilvano (PE) (IT); DE NISCO, Bruno, 65122 Pescara (IT)
(74) Representative: Mar.Bre S.r.l.
(86) International application number: PCT/IB2022/059684
(87) International publication number: WO 2023/062502

(56) References cited:
- EP-A1- 2 586 298
- US-A1- 2007 022 970

## Description

The object of the present invention is a device for traction rehabilitation and treatment of traction in the walking dysfunctions of the animals and/or for the general training of the cardio-respiratory and muscular functions of said animals, preferably of quadrupeds.

Currently, there are devices capable of rehabilitating the traction of the animals that have walking dysfunctions or that allow training of the cardio-respiratory and muscular functions of healthy animals, and are used for the development of a global traction within the stationary scope.

For example, the patent application US2007022970A1 describes an apparatus for providing physical therapy to animals, where said apparatus comprises a physical therapy apparatus in combination with a treadmill.

Another example is the patent application EP2586298A1 that describes a walking training machine for animal that comprises a frame including wheels, a support means which supports an animal, a wire which is attached to the frame and has a hanging end portion capable of being connected to said support.

Such devices for the rehabilitation and/or training normally comprise a member for stationary traction of the treated animal which allows stationary traction activities and static running, for example a treadmill, and are generally positioned inside a tank containing water, said water providing an antigravity thrust, through the Archimedes' thrust, capable of relieving part of the weight of the animal to be treated.

Such rehabilitation and/or training devices have some drawbacks and problems.

For example, one of the major problems of such devices concerns their footprint, which makes them difficult to be transported and installed and therefore not suitable for carrying out, for example, "home" physiotherapy on transport means or not suitable for a small veterinary or rehabilitation and animal physiotherapy treatment centre (complexity and large dimensions of the device).

Another problem is related to the limited effectiveness of such devices; this is due to the fact that the therapist cannot relieve the animal's weight at will during therapy.

Substantially, the current devices are mainly based on a treadmill immersed in a tank and use the Archimedes' thrust (anti-gravity force that a body receives when immersed in a fluid) to support the animal and relieve the limbs of part of its weight.

It is known that, in the case of rehabilitation and treatment devices, the extent of the Archimedes' thrust depends on the morphological characteristics of the part of the body immersed in water of the treated animal.

During therapy or treatment, such anti-gravity thrust may not be modulated as needed, as it is not possible to bring only the portion, part of the animal's body out of the tank in which it is immersed, thus adjusting the Archimedes' thrust.

It should be noted, for example, the treatment of a dog.

The dog is placed on the treadmill and the tank is gradually filled with water in order to increase the Archimedes' thrust.

When the dog begins to float and is therefore relieved of part of its weight, the Archimedes' thrust is not uniform due to the morphology of the body of the dog, resulting to be greater in the front part of said body.

Such possible modulation of the Archimedes' thrust, therefore, does not allow the therapist to appropriately relieve, i.e. only in the areas where a different relief is to be applied, the weight of the animal during therapy or treatment.

The therapist, in fact, on the basis of the treatment needs presented by the individual animal, its physical structure and biomechanical considerations that the therapist carries out before or during the treatment, defines the relief to which the limb or limbs of the animal must be subjected, in order to carry out a correct and effective treatment.

It is therefore clear that, during the immersion in the tank, every treated animal is subjected to the sole Archimedes' thrust (which acts as a contrast to the force of gravity) exerted by the liquid in which it is immersed without any possibility of changing continuously and in a controlled way, the aforesaid force during the treatment or in the various repeated treatments in order to activate the proprioceptive and neurological stimuli of the animal.

Furthermore, such rehabilitation devices do not allow the Archimedes' thrust to be diversified on the individual limbs according to the treatment needs.

These issues therefore limit the effectiveness of the treatments implemented by the current rehabilitation devices.

Furthermore, the practicality of use of the current devices is reduced due to the need of the tanks; the use of tanks filled with water, in fact, forces the animal to be immersed and, at times, the therapist, in turn, must wear suitable equipment to be able to immerse.

Further, the use of such devices involves long waiting times, as it is necessary to wait for the tank to fill/empty and for the drying times of the animal.

Finally, it should be noted that the current rehabilitation and/or training devices have high costs both in terms of purchase and in terms of single treatment due to the maintenance necessary for an effective and safe use (management cost for emptying and filling the tank with pump, sanitation, filtering, electric costs for the management of carpet in water).

It should also be considered that once the treatment is finished, the water must be removed and replaced, in order to be filtered and treated and in order to be reused, otherwise it must be properly disposed of as waste.

The purpose of the present invention is to obviate such kind of drawbacks, by providing a device for the rehabilitation and treatment of traction in the walking dysfunctions of the animals and for the general training of the cardio-respiratory and muscular functions of the animals.

A further object of the present invention, at least for one or more executive variants, is to provide a device for the rehabilitation and treatment of traction in the walking dysfunctions of the animals and for the general training of the cardio-respiratory and muscular functions of the animals with limited dimensions. and that it is easy to be transported and used in a home therapy or in a veterinary facility.

A further object of the present invention, at least for one or more executive variants, is to provide a device that is more effective in carrying out the rehabilitation function thereof and the treatment of traction in the walking dysfunctions of the animals.

A further object of the present invention, at least for one or more executive variants, is to provide a device that is of simpler and more practical use for the therapist.

A further object of the present invention, at least for one or more executive variants, is to provide a device having a reduced purchase and management costs. This and other purposes, which shall become clear later, are achieved with a device for the rehabilitation and treatment of traction in the walking dysfunctions of the animals and for the general training of the cardio-respiratory and muscular functions of the animals according to clam 1.

Other objects may also be achieved through the additional features of the dependent claims.

Further features of the present invention shall be better highlighted by the following description of a preferred embodiment, in accordance with the patent claims and illustrated, purely by way of a non-limiting example, in the annexed drawing tables, wherein:
- Figure 1 shows a front view of a first possible executive embodiment of the device, according to the present invention, in operating position;
- Figure 2 is a side view of the device of Figure 1;

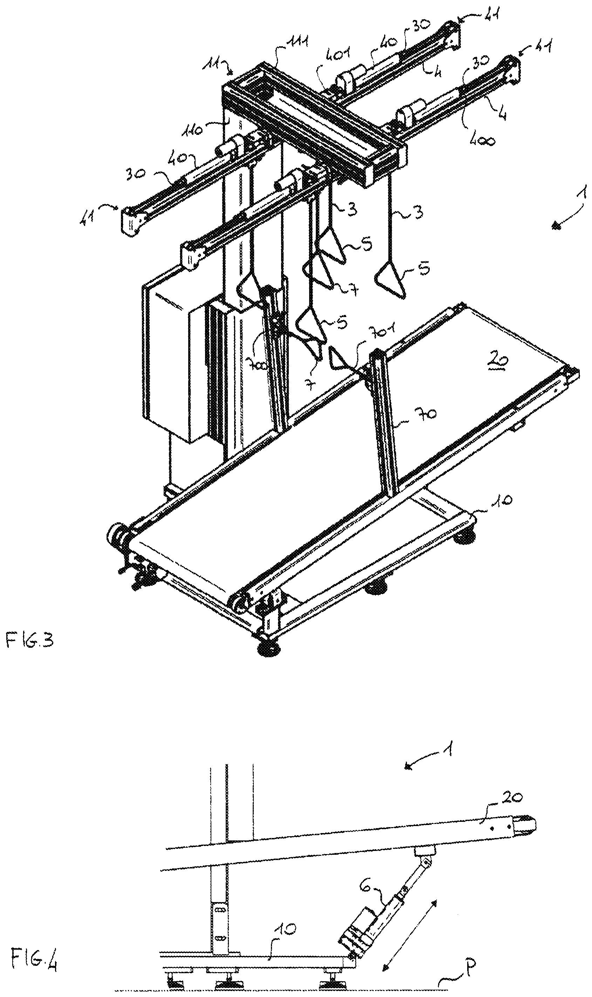

- Figure 3 is a perspective view of the device of Figure 1;
- Figure 4 shows a detail of a component of the device of Figure 1, in particular of the structure that supports the means for stationary traction;
- Figure 5 shows the possible adjustments of the support member and of the parts thereof;
- Figure 6 shows the possible adjustments of the lift tie rods;
- Figure 7 shows a side view of a second possible executive embodiment of the device according to the present invention;
- Figure 8 shows a front view of the device of Figure 7;
- Figure 9 shows a perspective view of the device of Figure 7;
- Figure 10 shows a perspective view of a possible executive embodiment of the device according to the present invention;
- Figure 11 shows a perspective view of the device of Figure 10.
- Figure 12 shows a perspective detail of Figure 11.

The features of the device for the rehabilitation and treatment of traction in the walking dysfunctions of the animals and for the general training of the cardio-respiratory and muscular functions of the animals are now described, hereinafter referred to only as device, for simplicity of description, using the references contained in the figures.

Hereinafter the term "walking dysfunctions of the animals" refers to all those problems that limit the movement of the animals, such as neurological, muscle or joint problems due to pathologies, traumas, incorrect habits, advanced age or other, while the general training of the cardio-respiratory and muscular functions for the sport animal shall mean an activity able to train both the sport animal, i.e. the animal used in agility, ring, defence or similar, and the non-sport animal.

Without any limiting intent, the device according to the present invention will be herein illustrated with reference to quadrupeds, in particular to dogs, it being understood that what illustrated herein may be extended, with suitable arrangements, also to other quadrupeds, such as, for example, horses.

It was surprisingly discovered that one of the reasons for the reduced effectiveness of the devices currently available in the rehabilitation and treatment of traction in the walking dysfunctions (based on treadmills immersed in a tank suitably filled with water), is due to the fact that the animal is subject, during the activity of stationary traction, such as the assisted walking on a treadmill, to a non-modulable weight relief between the different limbs.

It was also found that said current rehabilitation devices are not able to adequately and proportionally unload the weight of the treated animal, further limiting the effectiveness of the treatment.

The treatment with said rehabilitation devices, therefore, does not allow a suitably controlled and regulated relief of the treated animal, which is therefore not sufficiently supported and adequately relieved of (gravity) loads in its stationary traction activity during the physiotherapy treatment step.

Such loads subject the treated animal to non-adjustable gravity forces, creating stress and discomfort in the animal.

Basically, the animal is not adequately unloaded from the gravity forces and correctly supported during the stationary traction activity.

In fact, as anticipated, the current devices are substantially based on a treadmill immersed in a tank and use the Archimedes' thrust (anti-gravity force that a body receives when immersed in a fluid) to support the animal and relieve the limbs from part of its weight.

It is known that, in the case of rehabilitation and treatment devices, the extent of the Archimedes' thrust depends on the morphological characteristics of the part of the body immersed in water of the treated animal.

During therapy or treatment, such anti-gravity thrust may not be modulated as needed as it is not possible to bring only the portion, part of the animal's body out of the tank in which it is immersed.

Such possible modulation of the Archimedes' thrust does not allow the therapist to appropriately relieve, i.e., only in the areas where a different relief is to be applied, the weight of the animal during therapy or treatment.

These issues therefore limit the effectiveness of the treatments implemented through the current rehabilitation devices.

Numeral 1 indicates, as a whole, the device according to the present invention. Said device 1 comprises a support structure or platform 10, at least one means for stationary traction 20, such as for example a treadmill or another similar member, arranged above said structure 10 and adapted to allow the static walking of an animal so that the treated animal remains with the trunk substantially stationary with respect to the device 1 so as to take a correct position for the purposes of the treatment.

Said means for stationary traction 20 allows the stationary traction activity, at the different speeds required by the treatment (walking, running, etc.), and may comprise an active type treadmill, i.e. equipped with actuation means, or of the passive type, i.e. without actuation means, and means able to change the inclination thereof with a positive angle with respect to the horizontal axis of the same treadmill (ascent) or, if necessary, with a negative angle with respect to said horizontal axis (descent).

For such purpose, said means for stationary traction 20 may be provided with one or more actuators 6, suitably coupled with the structure 10, capable of changing the inclination of said means 20 with respect to the lying plane of the device 1, and therefore varying the weight distribution of the animal to be treated on the fore/hind limbs.

Said device 1 may also comprise a member for lifting the stationary traction member, for example of the pantograph type (not illustrated in the accompanying figures), that allows the animal's support surface to be lifted and approached to the support 11 or to be distanced therefrom.

The device 1 according to the present invention comprises at least one support member 11 adapted to support the weight of the treated animal, or a share portion, part thereof.

Said support member 11 comprises at least one upright 110 which extends substantially orthogonal to the structure 10, preferably to the side of the means for stationary traction 20, and at least one cross member 111, suitably fixed to the upright 110, which extends substantially parallel to the structure 10 and preferably above the means for stationary traction 20.

It should be noted that said support member 11 may be made according to different geometries and/or structures, all similar in that they provide an upright adapted to develop in a substantially orthogonal direction with respect to the structure 10, and a cross member capable of being fixed to such upright and adapted to develop in a direction substantially parallel to said structure 10 so that at least part of the support member 11 is parallel to the means for stationary traction 20 and preferably above it.

Said support member 11 comprises at least two bars 4 suitably fixed to the cross member 111, a plurality of lift tie rods 3, at least one harness 5, said bars 4 being arranged substantially parallel to each other and having a longitudinal development substantially equal to the length of the means for stationary traction. 20.

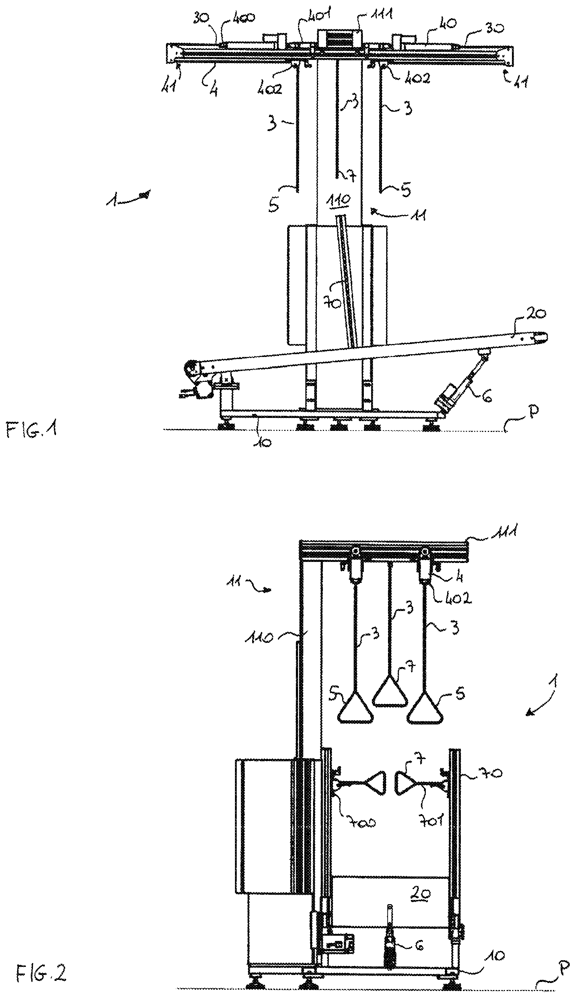

Said bars 4 are arranged substantially horizontal, i.e. their lying plane is substantially parallel to the plane P of the floor or of the support surface of said device 1 (see for example Figure 1).

Furthermore, the term "lift tie rod" hereinafter refers to an element able to support, at least partially, the weight of the animal and may comprise, for example, flexible elements such as ropes, belts, cables, flexible metal cables, chains or the like, or rigid elements.

Hereinafter, without any limiting intent, the device 1 equipped with flexible lift tie rods 3 and made in the form of cables or the like shall be described.

The device 1 according to the present invention may be provided with different types of harnesses, such as for example:
- joint harnesses 5 cooperating with the limbs of the animal to be treated and capable of alleviating and relieving the weight of the animal on the same limbs and of avoiding or reducing forward movements in order to limit or eliminate the "pendulum effect" in the same animal; and/or
- dorsal harnesses 7 cooperating with the central zone of the animal to be treated and capable of acting as a transverse constraint adapted to limit or eliminate possible transverse movements of the animal.

In general, said dorsal harnesses 7, as it shall be illustrated below, may be used as:
- vertical supports, acting as an aid on the vertical plane for the relief of the weight of the animal to be treated; or
- horizontal constraints limiting, substantially on the horizontal plane, the transverse movements of the animal with respect to the longitudinal axis of the means for stationary traction 20, preventing the same animal from steering; or
- both as vertical supports and as horizontal constraints, in such case said harnesses 7 combine the characteristics and advantages of the vertical and horizontal variants.

The device 1 according to the invention, therefore, may be provided with:
- at least one joint harness 5 adapted to cooperate with the front portion of the animal (chest, shoulders and/or forelegs) and comprising walking restraints capable of allowing the treated animal to move along the longitudinal axis of the means for stationary traction 20; and/or
- at least one joint harness 5 adapted to cooperate with the rear portion of the animal (hips and/or hind legs) and comprising walking constraints capable of allowing the treated animal to move along the longitudinal axis of the means for stationary traction 20; and/or
- at least one dorsal harness 7 or central blocking band adapted to cooperate with the median portion of the animal (belly and/or back), if the animal is a dog, it would preferably tie the zone between the 11-th and the 13-th vertebra of the vertebral column of the treated animal.

In general, said joint harnesses 5, when fastened to the support member 11, by means of the respective lift tie rod 3, are adapted to be worn by the treated animal and to support, at least partially, the weight thereof, while said dorsal harnesses 7, preferably when constrained to the means for stationary traction 20 in accordance with what illustrated below, prevent it from turning/steering.

Such joint 5 and dorsal 7 harnesses may also be made and combined in a single harness able to carry out the animal support functions and walking constraint.

Said single harness may advantageously be equipped with hooking elements placed at the zones of the animal to be provided with support and/or constraint.

Said joint 5 and dorsal 7 harnesses, when constrained to suitable constraint points provided by the support member 11 or in general by the device 1, are adapted for maintaining a correct three-dimensional position of the animal's supporting skeletal system and provide adequate support, and spatial alignment of the animal's vertebral column.

Such joint 5 and dorsal 7 harnesses may be adjusted and adapted to the size of different animals being treated, furthermore it is possible for the device to be equipped with two or more types of harnesses, for animals of very different sizes, for example one suitable for a small-sized animal, one suitable for a medium-sized animal and one suitable for a large-sized animal.

In general, the device 1 according to the present invention may be provided with any type of harness suitable for the purpose, i.e. able to cooperate with the body of the animal in order to implement a treatment on the same animal, said harness being able to comprise the harnesses currently available on the market or ad hoc harnesses.

As anticipated, the device 1 comprises a plurality of lift tie rods 3 adapted to connect the joint harness 5 to the support member 11, in one or more constraint points arranged on the support member 11, in a direction perpendicular to the means for stationary traction 20.

In accordance with possible embodiments, the device 1 according to the invention may preferably comprise:
- at least one first and at least one second lift tie rod 3 for the connection of the respective joint harnesses 5 of the animal's hips to the support member 11; preferably to the said bars 4; and/or
- at least one first and at least one second lift tie rod 3 for the connection of the respective joint harnesses 5 of the animal's shoulders to the support member 11, preferably to the said bars 4; and/or
- at least one lift tie rod 3 for connecting the dorsal harness 7, or band of the central zone of vertebral column of the animal, to the support member 11, said dorsal harness 7 being preferably placed at the zone between the 11-th and the 13-th vertebra of the vertebral column of the treated dog;
in such case, a harness 5 being provided for each limb of the animal to be treated. In general, therefore, the device 1 may provide for the use of a lift tie rod 3 for each limb of the animal to be treated or at least two lift tie rods 3 for each harness 5, 7 provided, each tie rod 3 being dedicated to a respective limb or to a respective side (right/left) of the animal to be treated, said device 1 being able to use, as seen:
- at least one harness 5 for the support of the only front portion of the animal to be treated, or
- at least one harness 7 for the support of only the median/dorsal portion, or
- at least one harness for the support of only the rear portion, or
- possible combinations of said harnesses 5 and 7.

In general, the number and type of harnesses, as well as the relative constraint points to the support member 11, are chosen by the therapist on the basis of the morphology of the animal to be treated and on the basis of the therapeutic needs of the same animal as well as the type of treatment to be implemented.

The device 1 according to the present invention is further characterised in that it is designed to change and adjust the geometry and position of at least one operating parameter so as to make said device 1 adaptable to the size and/or pathologies and/or needs of the animal to be treated or to allow a different unload/relief of the weight of the same animal on the individual limbs. Such at least one operating parameter comprises at least the distance D between the bars 4, and may further comprise at least the oscillation free length L of the aforementioned lift tie rods 3.

Preferably, as it will be illustrated shortly, the device according to the present invention allows at least the oscillation free length L of each oscillation tie rod 3 and at least said distance D among the bars 4 to be reduced or increased.

In general, the oscillation free length L of the lift tie rods 3, is to be understood as the distance, substantially vertical, between the constraint point of the lift tie rod 3 to the relative return means 402 of the support member 11 and the corresponding hooking elements of the harness 5, 7 to the same lift tie rod 3, when the harness 5,7 is worn by the treated animal already positioned on the means for stationary traction 20, in a way suitable for carrying out the treatment defined by the therapist.

The value of the oscillation free length L, and the adjustment thereof, allows relieving, more or less importantly, part of the weight of the animal to be treated from one or more limbs.

Basically, by intervening on the value of the oscillation free length L, the therapist varies the support provided to the animal by a certain lift tie rod 3, thus varying the weight component that burdens in a portion, part on the different limbs of the animal.

In general, the oscillation free length L of each lift tie rod 3 may be adjusted manually, by acting on the means that keep said lift tie rod 3 bound to the respective bar 4, or automatically, by means of suitable hydraulic, oil-hydraulic, pneumatic, electronic, electrotechnical devices, or the like.

In accordance with a possible preferred variant, said oscillation free length L is automatically adjusted by means of an actuator 40 capable of cooperating with the respective lift tie rod 3.

Preferably, the device 1 provides for equipping each lift tie rod 3 with a respective actuator 40.

In accordance with a possible embodiment variant, said actuator 40 is positioned on the bar 4, preferably in the proximity of the cross member 111, and may comprise an actuator 40 equipped with a sliding stem 400 at the free end of which a first end 30 of the lift tie rod 3 is suitably fixed.

Said actuator 40, in particular the main body thereof, is suitably constrained to the respective bar 4, preferably on the upper side of said bar 4, so that the stem 400 may come out in a direction parallel to the same bar 4, i.e. so that the re-entry/exit movement of the said stem 400 is substantially parallel to the floor plane P.

In general, said actuator 40 may be advantageously equipped with force sensors 401 or the like, such as for example load cells, adapted to detect the tension force to which the respective lift tie rod 3 is subjected.

Such tension measurement may be particularly useful for the therapist, providing information about the weight relief which the limb of the treated animal is subjected to, relative to the lift tie rod 3 examined.

Each lift tie rod 3, therefore, has a first end 30 constrained to the actuator 40, and a second end 31 connected to the harness 5, said lift tie rod 3 using suitable mechanical references (not clearly illustrated in the accompanying figures) provided by the bar 4 in which it is slid.

The stem 400, being able to return or exit from the actuator 40, allows the position of the constraint point of the first end 30 of the lift tie rod 3 to be changed, thus adjusting the oscillation free length L.

Basically, in accordance with such executive variant, the length of the lift tie rod 3 remains substantially the same, while the position of constraint point thereof to the bar 4 is changed so as to allow the oscillation free length L (the oscillation free length L may not correspond to the length of the lift tie rods 3) to be adjusted.

Nothing prevents the provision of different actuators, for example of the type capable of collecting or releasing the lift tie rod 3, adjusting the length thereof.

In order to make the lift tie rod 3 slide better, the portion/opening of the bar 4 intended for the passage of the same tie rod 3, may be provided with guide means 41 such as pulleys, bearings, return rollers or the like.

Said actuator 40 may be further provided with at least one return means 402 cooperating with the respective lift tie rod 3.

In accordance with a possible executive variant, said return means 402 is placed on the bar 4 and is capable of sliding, manually or automatically, along the same bar 4.

For example, according to a possible executive variant, the actuator 40 is preferably placed on the upper side of the bar 4, while the return means 402 is preferably placed on the lower side of said bar 4.

According to such possible variant, the first end 30 of the lift tie rod 3 is fixed to the stem 400, while the second end 31 is guided along the upper side of the bar 4 until reaching the passage opening or the guide means 41, and then be guided along the lower side of the bar 4 until reaching said return means 402, from which it comes out extending downwards and above the means for stationary traction 20. Nothing prevents alternative installations and arrangements in which the actuator 40 and the return means 402 may be placed on the sides or on the same side of the bar 4; said side being preferably able to consist in the lower side of said bar 4 so as to reduce the returns of the lift tie rod 3.

The sliding S of said return means 402 allows adjusting the point at which the lift tie rod 3 falls towards the underlying means for stationary traction 20, and thus adjusting the position of the harnesses 5with respect to the longitudinal axis of the said means for stationary traction 20.

It is preferable that the oscillation free length L of each lift tie rod 3 is adjustable autonomously and independent of the oscillation free length of the other lift tie rods 3 provided.

In general, in order to reduce the oscillation free length L of the lift tie rods 3, it is preferable that the joint harness 5 is equipped with braces or belts, which wrap around the hips and the shoulders of the treated animal, and that such braces have hooking elements, such as, for example, rings, at the left shoulder and the right shoulder or at the left hip and the right hip, so that the first lift tie rod 3 may be connected to a point of the joint harness 5 corresponding to the right shoulder of the treated animal and that the second lift tie rod 3 may be connected to a point of the joint harness 5 corresponding to the left shoulder of the treated animal, by means of such hooking elements.

Furthermore, as already mentioned, it is advantageous that at least one of said lift tie rods 3, preferably all tie rods 3, have an oscillation free length L which may be adjusted autonomously and independently so as to allow the differentiated treatment of the animal's limbs.

With reference to the dorsal harnesses 7 they may be suitably fastened to the bars 4, in accordance with what illustrated with reference to the joint harnesses 5.

In accordance with a possible executive variant, given by way of a non-limiting example, said dorsal harnesses 7 may make use of a dedicated fastening system, i.e. substantially made solely for the constraint of said dorsal harnesses 7.

Such variant is particularly advantageous if said dorsal harnesses 7 act as horizontal constraints limiting, substantially on the horizontal plane, the transverse movements of the animal to be treated.

For such purpose, said fastening system provides for fastening said dorsal harnesses 7 to rods 70 or the like, said rods 70 being able to be suitably constrainable to the means for stationary traction 20 and being able to be equal in number to the number of dorsal harnesses provided.

Preferably, it is possible to provide at least one rod 70 located on the right side of the said means for stationary traction 20 or of the structure 10 and a rod 70 located on the left side of said means for stationary traction 20 or of the structure 10, said rods 70 being able to slide and be blocked along suitable guide means, for example made in the form of rails, or being able to be inserted and blocked along a plurality of holes made along the right/left sides of said means for stationary traction 20 or of the structure 10 or being able to comprise clamps capable of being tightened along said right/left sides.

Each rod 70 is shaped so as to define a groove, preferably defined on the portion or side of the rod 70 facing the means for stationary traction 20, in which a carriage 700, to which an end of a horizontal tie rod 701 is constrained, is slidingly housed, the other end of said horizontal tie rod 701 being constrained with the respective dorsal harness 7.

Thanks to the possible adjustments/sliding of the rod 70 and of the carriage 700, it is possible to adjust the position along the right and left sides of the means 20 and the height along the rod 70 of the dorsal harness 7, so as to make it adaptable to the type and size of the animal to be treated.

In general, therefore, said dorsal harnesses 7 act as:
- vertical supports when fastened to the bars 4; or
- horizontal constraints when fixed to said rods 70; or
- both as vertical supports and as horizontal constraints when fastened to both bars 4 and rods 70.

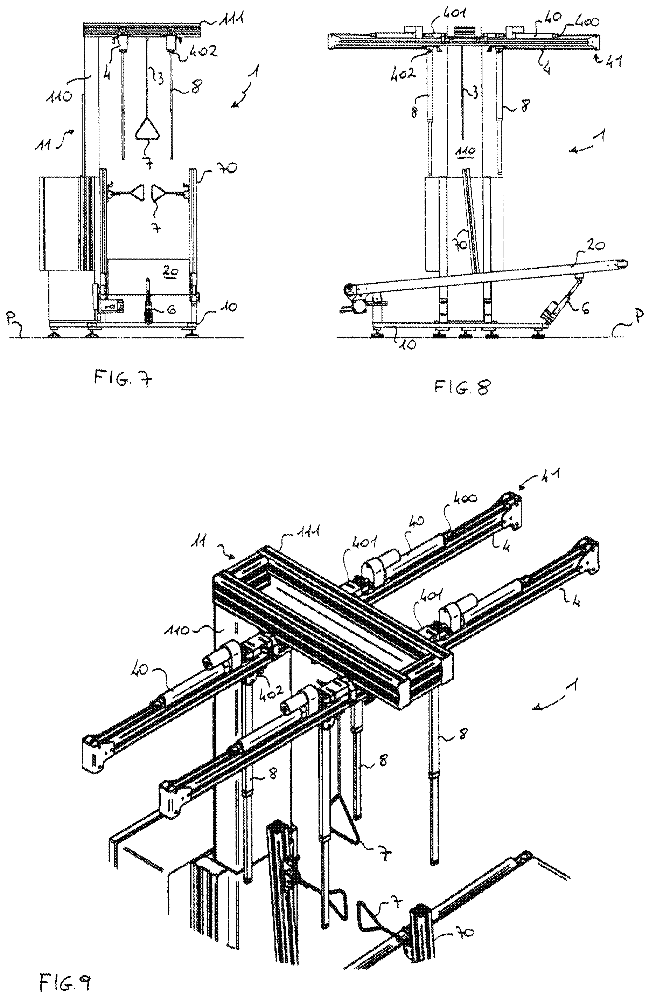

With reference to figures 7, 8 and 9, a second possible executive variant of the device 1 according to the present invention is now described, wherein said device 1 may comprise sheath means 8 within which the lift tie rods 3 are inserted and passed (the harnesses 5 are not shown in the figures).

Said sheath means 8 are preferably fixed at the return means 402 so that the lift tie rod 3, exiting from said return means 402, is inserted inside the respective sheath means 8.

Nothing prevents said sheath means 8 from being slidingly fastened to the bar 4 and or being suitably constrained to the respective return means 402.

Preferably, said sheath means 8 comprises a rigid body internally provided with a cavity which extends along the entire longitudinal development of the same body, in the form of a through hole, within which the corresponding lift tie rod 3 is free to slide.

The purpose of such sheath means 8 is to prevent the corresponding lift tie rod 3 from oscillating with respect to the return means 402, thus preventing oscillations, in particular lateral, to the animal during the treatment.

The rigidity of the sheath means 8 and the extension thereof, in other words, block the possible oscillatory movements of said tie rod 3.

In general, the extension of said sheath means 8 is adjustable in accordance with the oscillation free length L necessary for the tie rod 3 to support the animal to be treated or with the needs of the therapist.

For example, said sheath means 8 may provide a telescopic rigid body, with one or more stages, comprising two or more parts mutually sliding together, so as to be able to adjust the extension thereof.

In general, the use of sheath means 8 may be alternative or additional to the use of the dedicated fastening system of the dorsal harnesses 7 described above; as mentioned, the purpose is to further prevent the animal from possible side or steering movements.

As partly anticipated, said bars 4 are capable of sliding transversely with respect to the cross member 111, for example by means of guide means or rails or the like, so as to change the position F1 of the single bar 4 and make its mutual distance D adjustable, allowing the device 1 to be adapted, in particular the constraint points of the lift tie rods 3, to the dimensions of the animal to be treated, in particular to the width of the shoulders and hips.

It should be noted that said bars 4 slide, manually or mechanically by means of blocking/unblocking means or dedicated drive means (not shown), along the cross member 111 autonomously and independently of each other and once the desired value of the distance D is obtained, they are suitably blocked.

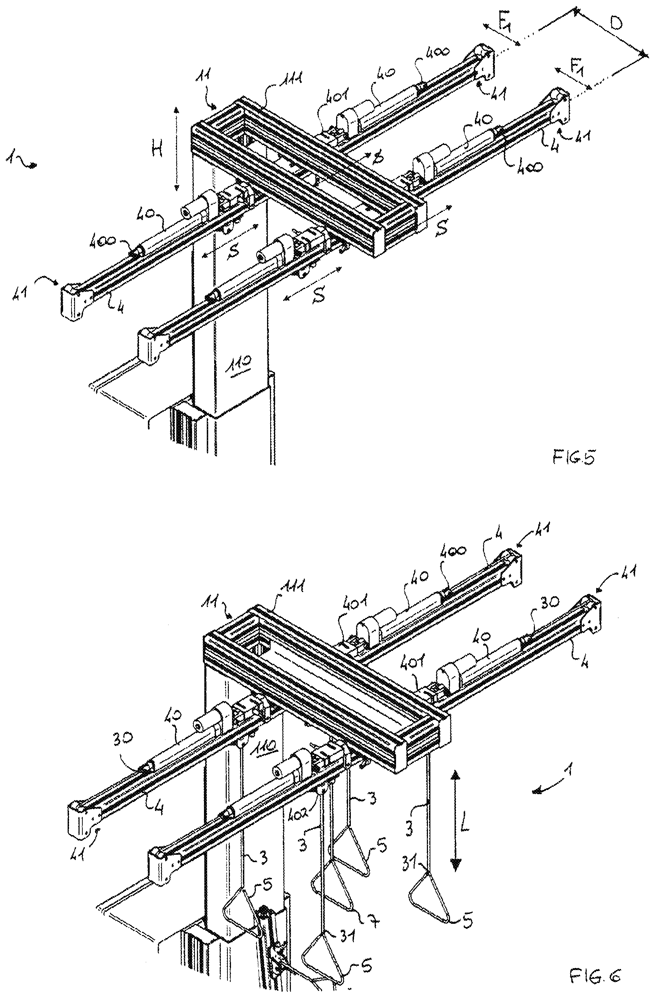

In accordance with a possible embodiment variant of the device according to the present invention, said support member 11 may comprise, for example inserted in said cross member 111, a manual, electric, electronic, hydraulic, pneumatic and/or mechanical device, able to allow the adjustment of the position F1 of said bars 4 and therefore their mutual distance D and consequently of the tie rods 3 fastened thereon, according to the arrows present in Figure 5.

Basically, the device 1 provides for the possibility of sliding, manually or automatically, the bars 4 so as to bring them closer or move them away, changing their position F1 and thus adjusting the distance D that separates them.

The adjustment of said distance D among the bars 4, in addition to adapting the constraint points of the lift tie rods 3 to the width of the shoulders and hips of the animal, allows the same lift rods 3 to exert a traction in a substantially vertical direction able to effectively relieve the weight of the treated animal, strongly reducing the torsional components in the plane parallel to the structure and the antigravity relief applied to the quadruped, which limit the potentials of the exercise and the effectiveness thereof.

Summarizing, therefore, according to a possible executive variant of the present invention, the position of the harnesses 5 may be adjusted:
- on the vertical plane, by adjusting the oscillation free length L; and/or
- on the horizontal plane, by adjusting the sliding S of the return means 402 and/or the distance D between the bars by means of the position F1.

In accordance with a possible executive variant of the device 1, it is possible to provide that the aforementioned support member 11 departs from the structure 10 perpendicularly, or at least in a direction that has a component perpendicular to said structure 10, at only one side of the means for stationary traction 20 or of the structure 10, for example on the right side, or at the two contiguous sides, for example the right side and the rear side.

Such variant allows the dimension to be reduced and the portability of the device 1 to be improved.

Furthermore, in order to further contain the dimensions during the transportation of the device 1, it is possible to provide a support member 11 which may be adjusted in height.

In accordance with a possible embodiment variant, therefore, the upright 110 may provide for an adjustable extension which provides for adjusting, as a consequence, the height of the support member 11 and therefore the distance H among the constraint points of the lift tie rods 3 to the bars 4 and the structure 10. Said upright 110 may be a telescopic upright, with one or more stages, comprising two or more mutually sliding parts, which may be:
- taken down/lowered by approaching the cross member 111 to the structure 10 and/or to the means for stationary traction 20; and/or
- erected/lifted by moving the cross member 111 away from the structure 10 and/or from the means for stationary motion 20; and/or
- removable with respect to the structure 10, so as to be demountable making the movement/transportation of the device 1 easier and less burdensome.

It may be understood how the adjustment of the extension of the support member 11, by the adjustment of the height of the upright 110, also makes it possible to make adjustable the height of the entire device 1, facilitating its transportation. In accordance with a preferred variant, the height of the device 1 may be reduced to a value of less than one metre.

The adjustment of the distance H of the support member 11, allowing the adjustment of the distance in a perpendicular direction, with respect to said structure 10, among said one or more constraint points and the means for stationary motion 20 or the structure 10, allows it to be modified, for example by reducing it, the oscillation free length L of the lift tie rods 3, in order to better constrain the treated animal and guide it in carrying out the correct movements.

In general, the distance H may be adjusted in order to find and define an optimal distance H with respect to the dimensions of the animal, where optimal height H means a distance H for which the animal does not touch the bars or the cross member 111 with its head 4 and may take a correct position on the traction member 20.

A possible method of use and operation of the device 1 according to the present invention is now reported, by way of a non-limiting example.

In general, the means for stationary traction 20 has a walking direction, corresponding for example to the sliding direction of the treadmill in the case shown in the accompanying figures, with respect to which a left side, a right side, a front side and a back side may be identified.

The device 1 may be loaded onto a transportation device and easily transported by lowering the upright 110 as much as possible and reducing the total height so that the dimensions are compact and small.

Once the room/environment of use has been reached and the device 1 has been arranged in position, the animal to be treated is put on the harnesses 5 and/or 7, the support member 11 is lifted, for example by stretching the upright 110, up to a height suitable for allowing the animal to be treated to rest its limbs on the means for stationary traction 20 without touching the cross member 111 or the bars 4 with its head.

In such way, the animal to be treated may then arrange itself with the limbs on the means for stationary traction 20 and be substantially overhung vertically by at least one part of the support member 11, substantially said cross member 111 and said bars 4.

At this point, with the animal harnessed, it is possible to proceed by adjusting the distance D among the bars 4 in order to adapt it to the width of the shoulders and hips of the animal to be treated.

The lift tie rods 3, the first end 30 thereof was previously constrained to the actuator 40, are lowered and their second end 31 is connected to the hooking elements arranged on the braces of the harness 5, respectively on the left shoulder and on the right shoulder and respectively on the left hip and on the right hip.

The oscillation free length L of the lift tie rods 3 is adjusted, preferably independently for each lift tie rod 3, in order to adapt each of the lift tie rods to the height of the shoulders and hips of the animal to be treated and possibly providing the weight relief established by the therapist.

In fact, under the same conditions, once the animal has been harnessed and the oscillation free length L of the tie rods 3 has been adjusted, further reducing said oscillation free length L of one or more tie rods, it is possible to provide greater relief to the corresponding limb of the animal. relieving it, partially or completely, of part of its weight.

It should be noted that, as needed, the weight relief on each limb may be changed during the assisted walking therapy, by acting on the actuators 40 and possibly by controlling, through the sensors 401, the voltage.

It will also be possible to change the inclination of the means for stationary traction 20 by acting on the actuator 6 to relieve (downward inclination) or burden (upward inclination) the stationary traction of the treated animal.

The horizontal walking constraints, for example those relating to the fastening band of the treated animal fixed in the proximity of the 13-th vertebra, are laterally tensioned to the vertebral column, to the right and left of the animal and, if required by the treatment, at the top of the support member 11 by means of a lift tie rod 3. The total height of the device 1, which may be greatly reduced, facilitates the treatment of even small-sized animals.

Summarizing, therefore, the device 1 according to the invention enables a plurality of fine adjustments of one or more operating parameters based on the specificities of every single treated animal, for example, it allows adjusting:
- the distance H among the constraint points of the lift tie rods 3 to the bars 4 and the means for stationary traction 20;
- the oscillation free length L of the lift tie rods 3;
- the distance D among the bars 4;
- the sliding S and the position of the return means 402 with respect to the bars 4.

Thanks to these characteristics, the device 1 allows the animal to be treated to be subjected to controllable forces and that the therapist may autonomously decide and change during the single treatment or during the different treatments, with respect to the devices for the rehabilitation of traction in the walking dysfunctions currently available.

As anticipated, the therapist intervenes by adjusting the oscillation free length L in order to relieve more or less the limb or the limbs of the animal.

The reduction of the oscillation free length L of the lift tie rods 3, with respect to the known devices, strongly reduces the oscillatory movements of the animal in its stationary traction activity to the benefit of the effectiveness of the treatment.

The treated animal, therefore, is more bound and guided in the execution of the correct movements, with a consequent greater effectiveness of the rehabilitation therapy.

The oscillation free length L may be greatly reduced, by significantly bringing the first and the second constraint points closer to the shoulders and hips of the treated animal, with a reduction to a minimum of its oscillations.

The device according to the invention, therefore, allows the problems that afflict the current rehabilitation devices to be solved, by optimally guiding the treated animal, allowing a fine adjustment, suitable for every treated animal, of the length and position of the lift tie rods and also obtaining the advantage of a simpler and more immediate change of the adjustable elements of the machine during treatment.

In fact, the current devices do not provide for any type of adjustment; this does not allow any adaptability of the device to the animal, said animal being therefore potentially subjected to horizontal and torsional forces that make it more difficult the performance of correct movements during therapy with consequent reduction in the effectiveness of the treatment.

In addition, the device 1 allows avoiding the use of the tanks, by keeping dry the animal to be treated and allowing and facilitating a possible home therapy.

The device for rehabilitation and treatment of traction in the walking dysfunctions and/or for the general training of the cardio-respiratory and muscular functions of quadrupeds according to the present invention achieves the listed purposes and provides a new approach for the treatment of the animals.

It is clear that several variants to the invention described above are possible for the man skilled in the art, without departing from the novelty scopes of the inventive idea, as well as it is clear that in the practical embodiment of the invention the various components described above may be replaced with technically equivalent ones.

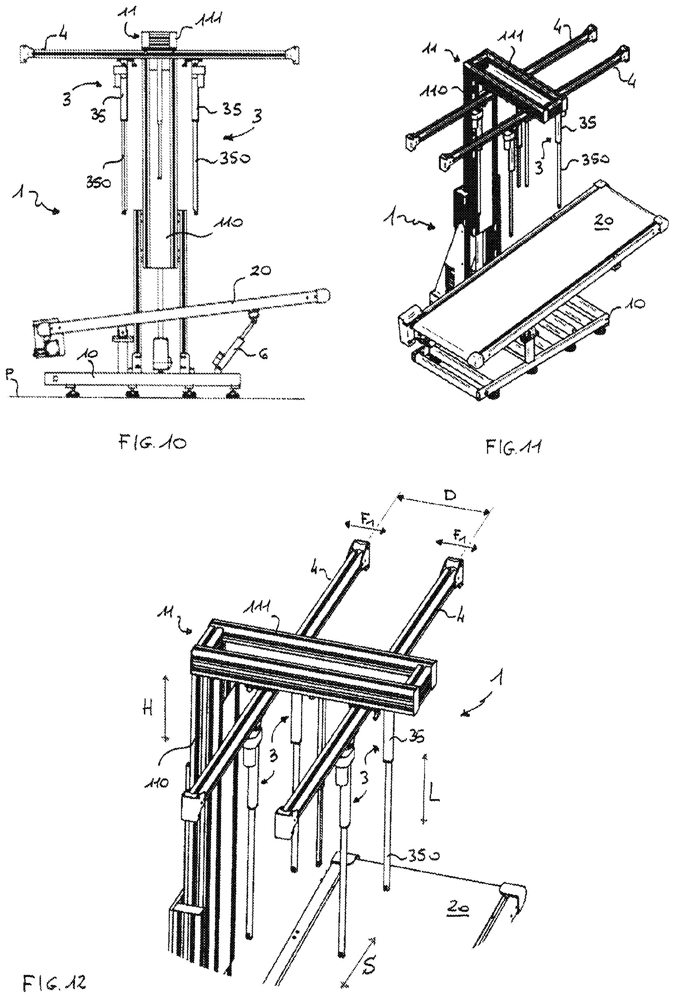

For example, in accordance with a possible executive variant, reported by way of non-limiting example in Figures 10-12, it is possible to use rigid lift tie rods 3 and suitably constrained to the bars 4.

In such case, the oscillation free length L of the lift tie rods 3 means the distance, substantially vertical, between the constraint point of the lift tie rod 3 to the respective bar 4 and the corresponding hooking elements of the harness 5, 7 to the same lift tie rod 3 when the harness 5,7 is worn by the treated animal already positioned on the means for stationary traction 20.

Basically, in accordance with said executive variant, said oscillation free length L is adjustable by varying, manually or automatically, the longitudinal development of said rigid lift tie rod 3.

In accordance with a preferred variant, said rigid lift tie rods 3 may comprise rigid elements such as, for example, telescopic bars or rods, hydraulic jacks or electric actuators or the like.

Preferably each lift tie rod 3 may comprise an actuator 35 equipped with a sliding stem 350 at the free end of which (substantially similar to the second end 32 of the flexible lift tie rod 3 illustrated above) a harness 5, 7 (not illustrated) may be suitably fastened.

Said actuator 35, in particular the main body thereof, is suitably constrained to the respective bar 4, so that the stem 350 may protrude towards the underlying means for stationary traction 20, the return/exit movement of the said rod 350 being substantially orthogonal to the floor plane P.

The stem 350, being able to return or exit from the actuator 35, allows the position of the free end thereof to be changed, to which the harness 5, 7 may be fastened, thus adjusting the oscillation free length L as a consequence.

In such case, said oscillation free length L is automatically adjusted by means of the return/exit of said stem 350.

Preferably, said actuator 35 is slidingly constrained to the respective bar 4 so that it may slide, manually or mechanically, along said bar 4.

Similarly to what already illustrated, the sliding S of said actuator 35 allows the point on the bar 4, from which the lift tie rod 3 extends vertically towards the underlying means for stationary traction 20, to be adjusted, and therefore the position of the harnesses 5 to be regulated with respect to the longitudinal axis of the said means for stationary traction 20.

The actuator 35 may be advantageously equipped with force sensors or the like (not shown), such as load cells, adapted to detect the tension force to which the respective lift tie rod 3 is subjected.

It should be noted that a rigid lift tie rod 3 avoids the use of sheath means 8, as its rigidity helps preventing the animal from further possible lateral or steering movements.

## Claims

1. Device (1) for the rehabilitation and treatment of traction in the walking dysfunctions of the animals and/or for the general training of the cardio-respiratory and muscular functions of the animals, said device (1) comprising a structure (10), at least one means for stationary traction (20) adapted to allow an animal to walk, at least one support member (11) adapted to support the weight of the treated animal comprising at least one upright (110), at least one cross member (111), fixed to said upright (110), which extends substantially parallel over said structure (10), at least one bar (4) fixed to said cross member (111), a plurality of lift tie rods (3), at least one harness (5; 7)
and at least two bars (4) arranged horizontally and parallel to each other and slidingly fixed with respect to said cross member (111),
**characterised in that** said device (1) is arranged to change and adjust at least one operating parameter so as to make said device (1) adaptable to the size or pathologies of the animal to be treated, said operating parameter comprising at least the distance (D) among said bars (4) so as to make said device (1) adaptable to the width of the shoulders and hips of said animal.

2. Device (1) according to the previous claim, wherein said device (1) is also arranged to change and adjust the oscillation free length (L) of each lift tie rod (3) so as to allow a different unloading/relief of the weight of the said animal on the individual limbs.

3. Device (1) according to the previous claim, wherein the oscillation free length (L) of each lift tie rod (3) is manually or automatically adjustable.

4. Device (1) according to any previous claim, wherein said lift tie rods (3) comprise flexible elements such as ropes, belts, cables, chains or the like.

5. Device (1) according to the previous claim, wherein said oscillation free length (L) is automatically adjusted by means of an actuator (40) capable of cooperating with the respective lift tie rod (3), said lift tie rod (3) having a first end (30) constrained to said actuator (40), and a second end (31) connected to said harness (5; 7).

6. Device (1) according to the previous claim, wherein said actuator (40) is positioned on said bar (4), and is equipped with a sliding stem (400) at the free end of which an end of said lift tie rod is fixed (3).

7. Device (1) according to any previous claim 5 or 6, wherein said actuator (40) is provided with at least one return means (402) cooperating with the respective lift tie rod (3), said return means (402) being placed on said bar (4) and capable of sliding, manually or automatically, along the same bar (4), the sliding (S) of said return means (402) allowing the point, in which the lift tie rod (3) falls towards the underlying means for stationary traction (20), to be adjusted.

8. Device (1) according to any previous claim from 4 onwards, wherein said device (1) comprises sheath means (8) within which said lift tie rods (3) are inserted and passed through, said sheath means (8) being fixed at said return means (402) and being able to comprise a rigid body, internally provided with a cavity that extends for the entire longitudinal development of the same body and within which the corresponding lift tie rod (3) is free to slide.

9. Device (1) according to the previous claim, wherein the extension of said sheath means (8) is adjustable in accordance with the oscillation free length (L) necessary for the lift tie rod (3) to support the animal to be treated or with the needs of the therapist, said sheath means (8) being able to provide a telescopic rigid body comprising two or more mutually sliding parts.

10. Device (1) according to any previous claim 1 to 3, wherein said lift tie rods (3) are rigid and comprise bars, or telescopic rods, hydraulic jacks or electric actuators.

11. Device (1) according to the previous claim, wherein said oscillation free length (L) is adjusted by varying, manually or automatically, the longitudinal development of said rigid lift rods (3).

12. Device (1) according to the previous claim, wherein each lift tie rod (3) comprises an actuator (35) equipped with a sliding stem (350) at the free end of which a harness (5, 7) may be fixed.

13. Device (1) according to any previous claim 5 to 12, wherein said actuator (35) (40) is equipped with force sensors adapted to detect the tension force to which the respective lift tie rod (3) is subjected.

14. Device (1) according to any previous claim, wherein said support member (11) comprises a manual, electric and/or mechanical device able to allow the adjustment of the mutual distance (D) among said bars (4), said bars (4) being capable of sliding, approaching or moving away, with respect to said cross member (111).

15. Device (1) according to any previous claim, wherein said one support member (11) is adjustable in height.

16. Device (1) according to the previous claim, wherein said upright (110) provides an adjustable extension, said upright (110) being a telescopic upright, with one or more stages, comprising two or more mutually sliding parts, which may be:
- taken down/lowered by approaching said cross member (111) to said structure (10) and/or said member for stationary traction (20); and/or
- erected/lifted by moving away said cross member (111) from said structure (10) and/or said member for stationary traction (20); and/or
- removable with respect to said structure (10), so as to be demountable.

17. Device (1) according to any previous claim, wherein said device (1) comprises different types of harnesses, such as:
- joint harnesses (5) cooperating with the limbs of the animal to be treated and capable of alleviating and relieving the weight of the animal on the same limbs; and/or
- dorsal harnesses (7) cooperating with the central zone of the animal to be treated, said dorsal harnesses (7) being fastenable to said bars (4) or using a dedicated fastening system.

18. Device (1) according to any previous claim, wherein said device (1) comprises:
- at least one first and at least one second lift tie rod (3) for connecting the respective joint harnesses (5) of the animal's hips to the said support member (11); and/or
- at least one first and at least one second lift tie rod (3) for connecting the respective joint harnesses (5) of the animal's shoulders to said support member (11); and/or
- at least one lift tie rod (3) for connecting said dorsal harness (7) to the said support member (11).

19. Device (1) according to the previous claim 17, wherein said fastening system provides for fastening said dorsal harnesses (7) to rods (70) which may be constrained to the said means for stationary traction (20), each rod (70) being shaped so as to define a groove wherein a carriage (700) is slidingly housed to which one end of a horizontal tie rod (701) is constrained, the other end of said horizontal tie rod (701) being constrained with the respective dorsal harness (7).

## Patentansprüche

1. Vorrichtung (1) für die Rehabilitation und Traktionsbehandlung bei Gangstörungen der Tiere und/oder für das allgemeine Training der kardiorespiratorischen und muskulären Funktionen der Tiere, wobei die Vorrichtung (1) eine Struktur (10), mindestens ein Mittel für stationäre Traktion (20), das geeignet ist, dass ein Tier gehen kann, mindestens ein Tragglied (11), das geeignet ist, das Gewicht des behandelten Tieres zu tragen, umfassend mindestens einen Ständer (110), mindestens ein Querglied (111), das an dem Ständer (110) fixiert ist, das sich im Wesentlichen parallel über die Struktur (10) erstreckt, mindestens einen Stab (4), der an dem Querglied (111) fixiert ist, mehrere Hub-Zugstangen (3), mindestens ein Geschirr (5; 7) und mindestens zwei Stäbe (4) umfasst, die horizontal und parallel zueinander angeordnet sind und in Bezug auf das Querglied (111) gleitend fixiert sind,
**dadurch gekennzeichnet, dass**
die Vorrichtung (1) angeordnet ist, um mindestens einen Betriebsparameter derart zu ändern und einzustellen, um die Vorrichtung (1) an die Größe oder Pathologien des zu behandelnden Tieres anpassbar zu machen, wobei der Betriebsparameter mindestens den Abstand (D) zwischen den Stäben (4) umfasst, um die Vorrichtung (1) an die Breite der Schultern und Hüften des Tieres anpassbar zu machen.

2. Vorrichtung (1) nach dem vorhergehenden Anspruch, wobei die Vorrichtung (1) auch angeordnet ist, um die schwingungsfreie Länge (L) jeder Hub-Zugstange (3) derart zu ändern und einzustellen, um eine unterschiedliche Verlagerung/Entlastung des Gewichtes des Tieres auf die einzelnen Gliedmaßen zu ermöglichen.

3. Vorrichtung (1) nach dem vorhergehenden Anspruch, wobei die schwingungsfreie Länge (L) jeder Hub-Zugstange (3) manuell oder automatisch einstellbar ist.

4. Vorrichtung (1) nach einem der vorhergehenden Ansprüche, wobei die Hub-Zugstangen (3) flexible Elemente wie Seile, Gurte, Kabel, Ketten oder dergleichen umfassen.

5. Vorrichtung (1) nach dem vorhergehenden Anspruch, wobei die schwingungsfreie Länge (L) automatisch mittels eines Stellglieds (40) eingestellt wird, das in der Lage ist, mit der jeweiligen Hub-Zugstange (3) zusammenzuwirken, wobei die Hub-Zugstange (3) ein erstes Ende (30), das an dem Stellglied (40) befestigt ist, und ein zweites Ende (31) aufweist, das mit dem Geschirr (5; 7) verbunden ist.

6. Vorrichtung (1) nach dem vorhergehenden Anspruch, wobei das Stellglied (40) auf dem Stab (4) positioniert ist und mit einem Gleitschaft (400) ausgestattet ist, an dessen freiem Ende ein Ende der Hub-Zugstange fixiert ist (3).

7. Vorrichtung (1) nach einem der vorhergehenden Ansprüche 5 oder 6, wobei das Stellglied (40) mit mindestens einem Rückstellmittel (402) versehen ist, das mit der jeweiligen Hub-Zugstange (3) zusammenwirkt, wobei die Rückstellmittel (402) auf dem Stab (4) platziert ist und in der Lage ist, manuell oder automatisch entlang desselben Stabes (4) zu gleiten, wobei das Gleiten (S) der Rückstellmittel (402) ermöglicht, dass der Punkt eingestellt wird, an dem die Hub-Zugstange (3) in Richtung des darunter liegenden Mittels für stationäre Traktion (20) fällt.

8. Vorrichtung (1) nach einem der vorhergehenden Ansprüche ab Anspruch 4, wobei die Vorrichtung (1) Hülsenmittel (8) umfasst, in die die Hub-Zugstangen (3) eingefügt und durch die sie geführt werden, wobei die Hülsenmittel (8) an den Rückstellmitteln (402) fixiert sind und in der Lage sind, einen starren Körper zu umfassen, der innen mit einem Hohlraum versehen ist, der sich über die gesamte Längsentwicklung desselben Körpers erstreckt und in dem die entsprechende Hub-Zugstange (3) frei gleiten kann.

9. Vorrichtung (1) nach dem vorhergehenden Anspruch, wobei die Erstreckung der Hülsenmittel (8) entsprechend der schwingungsfreien Länge (L), die für die Hub-Zugstange (3) notwendig ist, um das zu behandelnde Tier zu tragen, oder entsprechend den Bedürfnissen des Therapeuten einstellbar ist, wobei die Hülsenmittel (8) in der Lage sind, einen teleskopartigen starren Körper bereitzustellen, der zwei oder mehr zueinander gleitende Teile umfasst.

10. Vorrichtung (1) nach einem der vorhergehenden Ansprüche 1 bis 3, wobei die Hub-Zugstangen (3) starr sind und Stäbe oder Teleskopstangen, Hydraulikheber oder elektrische Stellantriebe umfassen.

11. Vorrichtung (1) nach dem vorhergehenden Anspruch, wobei die schwingungsfreie Länge (L) eingestellt wird, indem die Längsentwicklung der starren Hub-Zugstangen (3) manuell oder automatisch variiert wird.

12. Vorrichtung (1) nach dem vorhergehenden Anspruch, wobei jede Hub-Zugstange (3) ein Stellglied (35) umfasst, das mit einem Gleitschaft (350) ausgestattet ist, an dessen freiem Ende ein Geschirr (5, 7) fixiert werden kann.

13. Vorrichtung (1) nach einem der vorhergehenden Ansprüche 5 bis 12, wobei das Stellglied (35) (40) mit Kraftsensoren ausgestattet ist, die geeignet sind, die Zugkraft zu erkennen, der die jeweilige Hub-Zugstange (3) ausgesetzt ist.

14. Vorrichtung (1) nach einem der vorhergehenden Ansprüche, wobei das Tragglied (11) eine manuelle, elektrische und/oder mechanische Vorrichtung umfasst, die in der Lage ist, das Einstellen des gegenseitigen Abstands (D) zwischen den Stäben (4) zu ermöglichen, wobei die Stäbe (4) fähig sind, in Bezug auf das Querglied (111) zu gleiten, sich diesem anzunähern oder davon zu entfernen.

15. Vorrichtung (1) nach einem der vorhergehenden Ansprüche, wobei das eine Tragglied (11) höhenverstellbar ist.

16. Vorrichtung (1) nach dem vorhergehenden Anspruch, wobei der Ständer (110) eine einstellbare Erstreckung bereitstellt, wobei der Ständer (110) ein Teleskopständer mit einer oder mehreren Stufen ist, der zwei oder mehr zueinander gleitende Teile umfasst, die:
- durch Annähern des Querglieds (111) an die Struktur (10) und/oder das Glied für stationäre Traktion (20) nach unten gebracht/abgesenkt werden können; und/oder
- durch Wegbewegen des Querglieds (111) von der Struktur (10) und/oder dem Glied für stationäre Traktion (20) aufgestellt/angehoben werden können; und/oder
- in Bezug auf die Struktur (10) derart abnehmbar sind, um abmontierbar zu sein.

17. Vorrichtung (1) nach einem der vorhergehenden Ansprüche, wobei die Vorrichtung (1) verschiedene Arten von Geschirr umfasst, wie beispielsweise:
- Gelenkgeschirre (5), die mit den Gliedmaßen des zu behandelnden Tieres zusammenwirken und in der Lage sind, das Gewicht des Tieres auf diesen Gliedmaßen zu vermindern und zu entlasten; und/oder
- Rückengeschirre (7), die mit dem Mittelbereich des zu behandelnden Tieres zusammenwirken, wobei die Rückengeschirre (7) an den Stäben (4) befestigbar sind oder ein spezielles Befestigungssystem verwenden.

18. Vorrichtung (1) nach einem der vorhergehenden Ansprüche, wobei die Vorrichtung (1) umfasst:
- mindestens eine erste und mindestens eine zweite Hub-Zugstange (3) zum Verbinden des jeweiligen Gelenkgeschirrs (5) der Hüften des Tieres mit dem Tragglied (11); und/oder
- mindestens eine erste und mindestens eine zweite Hub-Zugstange (3) zum Verbinden des jeweiligen Gelenkgeschirrs (5) der Schultern des Tieres mit dem Tragglied (11); und/oder
- mindestens eine Hub-Zugstange (3) zum Verbinden des Rückengeschirrs (7) mit dem Tragglied (11).

19. Vorrichtung (1) nach dem vorhergehenden Anspruch 17, wobei das Befestigungssystem für das Befestigen der Rückengeschirre (7) an Stangen (70) sorgt, die an dem Mittel für stationäre Traktion (20) befestigt werden können, wobei jede Stange (70) derart geformt ist, um eine Nut zu definieren, in der ein Schlitten (700) gleitend aufgenommen ist, an dem ein Ende einer horizontalen Zugstange (701) befestigt ist, wobei das andere Ende der horizontalen Zugstange (701) an dem jeweiligen Rückengeschirr (7) befestigt ist.

## Revendications

1. Dispositif (1) pour la réhabilitation et le traitement des troubles de la marche liés à la traction chez les animaux et/ou pour l'entraînement général des fonctions cardiorespiratoires et musculaires des animaux, ledit dispositif (1) comprenant une structure (10), au moins un moyen de traction stationnaire (20) adapté pour permettre à un animal de marcher, au moins un élément de support (11) adapté pour supporter le poids de l'animal traité comprenant au moins un montant (110), au moins une traverse (111) fixée audit montant (110) et s'étendant sensiblement parallèlement à ladite structure (10), au moins une barre (4) fixée à ladite traverse (111), plusieurs tirants de levage (3), au moins un harnais (5 ; 7) et au moins deux barres (4) disposées horizontalement et parallèlement l'une à l'autre et fixées de manière coulissante par rapport à ladite traverse (111),
**caractérisé en ce que**
ledit dispositif (1) est conçu pour modifier et ajuster au moins un paramètre de fonctionnement afin de rendre ledit dispositif (1) adaptable à la taille ou aux pathologies de l'animal à traiter, ledit paramètre de fonctionnement comprenant au moins la distance (D) entre lesdites barres (4) afin de rendre ledit dispositif (1) adaptable à la largeur des épaules et des hanches dudit animal.

2. Dispositif (1) selon la revendication précédente, dans lequel ledit dispositif (1) est également conçu pour modifier et ajuster la longueur libre d'oscillation (L) de chaque tirant de levage (3) afin de permettre un déchargement/soulagement différent du poids dudit animal sur les membres individuels.

3. Dispositif (1) selon la revendication précédente, dans lequel la longueur libre d'oscillation (L) de chaque tirant de levage (3) est réglable manuellement ou automatiquement.

4. Dispositif (1) selon toute revendication précédente, dans lequel lesdits tirants de levage (3) comprennent des éléments flexibles tels que des cordes, des courroies, des câbles, des chaînes ou similaires.

5. Dispositif (1) selon la revendication précédente, dans lequel ladite longueur libre d'oscillation (L) est automatiquement ajustée au moyen d'un actionneur (40) capable de coopérer avec le tirant de levage respectif (3), ledit tirant de levage (3) ayant une première extrémité (30) contrainte audit actionneur (40) et une seconde extrémité (31) connectée audit harnais (5 ; 7).

6. Dispositif (1) selon la revendication précédente, dans lequel ledit actionneur (40) est positionné sur ladite barre (4) et est équipé d'une tige coulissante (400) à l'extrémité libre de laquelle une extrémité dudit tirant de levage est fixée (3).

7. Dispositif (1) selon l'une quelconque des revendications précédentes 5 ou 6, dans lequel ledit actionneur (40) est doté d'au moins un moyen de retour (402) coopérant avec le tirant de levage respectif (3), ledit moyen de retour (402) étant placé sur ladite barre (4) et capable de glisser, manuellement ou automatiquement, le long de la même barre (4), le glissement (S) dudit moyen de retour (402) permettant d'ajuster le point dans lequel le tirant de levage (3) tombe vers le moyen sous-jacent de traction stationnaire (20).

8. Dispositif (1) selon toute revendication précédente à partir de 4, dans lequel ledit dispositif (1) comprend des moyens de gaine (8) dans lesquels lesdits tirants de levage (3) sont insérés et traversés, lesdits moyens de gaine (8) étant fixés aux moyens de retour (402) et pouvant comprendre un corps rigide, pourvu intérieurement d'une cavité qui s'étend sur toute la longueur du corps et dans laquelle le tirant de levage correspondant (3) peut glisser librement.

9. Dispositif (1) selon la revendication précédente, dans lequel l'extension desdits moyens de gaine (8) est réglable en fonction de la longueur libre d'oscillation (L) nécessaire pour que le tirant de levage (3) supporte l'animal à traiter ou en fonction des besoins du thérapeute, lesdits moyens de gaine (8) étant capables de fournir un corps rigide télescopique comprenant deux ou plusieurs parties coulissantes l'une sur l'autre.

10. Dispositif (1) selon l'une quelconque des revendications précédentes 1 à 3, dans lequel lesdits tirants de levage (3) sont rigides et comprennent des barres, ou des tiges télescopiques, des vérins hydrauliques ou des actionneurs électriques.

11. Dispositif (1) selon la revendication précédente, dans lequel ladite longueur libre d'oscillation (L) est ajustée en faisant varier, manuellement ou automatiquement, le développement longitudinal desdits tirants de levage rigides (3).

12. Dispositif (1) selon la revendication précédente, dans lequel chaque tirant de levage (3) comprend un actionneur (35) équipé d'une tige coulissante (350) à l'extrémité libre de laquelle un harnais (5, 7) peut être fixé.

13. Dispositif (1) selon l'une quelconque des revendications précédentes 5 à 12, dans lequel ledit actionneur (35) (40) est équipé de capteurs de force adaptés pour détecter la force de tension à laquelle le tirant de levage respectif (3) est soumis.

14. Dispositif (1) selon toute revendication précédente, dans lequel ledit élément de support (11) comprend un dispositif manuel, électrique et/ou mécanique capable de permettre le réglage de la distance mutuelle (D) entre lesdites barres (4), lesdites barres (4) étant capables de glisser, de s'approcher ou de s'éloigner, par rapport à ladite traverse (111).

15. Dispositif (1) selon toute revendication précédente, dans lequel ledit élément de support (11) est réglable en hauteur.

16. Dispositif (1) selon la revendication précédente, dans lequel ledit montant (110) offre une extension réglable, ledit montant (110) étant un montant télescopique, à un ou plusieurs étages, comprenant deux ou plusieurs parties coulissantes l'une à l'autre, qui peuvent être :
- abaissées en approchant ladite traverse (111) de ladite structure (10) et/ou dudit élément pour traction stationnaire (20) ; et/ou
- érigées/soulevées en éloignant ladite traverse (111) de ladite structure (10) et/ou ledit élément pour traction stationnaire (20) ; et/ou
- amovibles par rapport à ladite structure (10), de manière à être démontable.

17. Dispositif (1) selon toute revendication précédente, dans lequel ledit dispositif (1) comprend différents types de harnais, tels que :
- harnais articulés (5) coopérant avec les membres de l'animal à traiter et capables de soulager et de répartir le poids de l'animal sur ces mêmes membres ; et/ou
- harnais dorsaux (7) coopérant avec la zone centrale de l'animal à traiter, lesdits harnais dorsaux (7) étant fixables auxdites barres (4) ou utilisant un système de fixation dédié.

18. Dispositif (1) selon toute revendication antérieure, dans lequel ledit dispositif (1) comprend :
- moins un premier et au moins un deuxième tirant de levage (3) pour relier les harnais articulaires respectifs (5) des hanches de l'animal audit élément de support (11) ; et/ou
- oins un premier et au moins un deuxième tirant de levage (3) pour relier les harnais articulaires respectifs (5) des épaules de l'animal audit élément de support (11) ; et/ou
- oins un tirant de levage (3) pour relier ledit harnais dorsal (7) audit élément de support (11).

19. Dispositif (1) selon la revendication précédente 17, dans lequel ledit système de fixation prévoit la fixation desdits harnais dorsaux (7) à des tiges (70) qui peuvent être contraintes auxdits moyens de traction stationnaire (20), chaque tige (70) étant façonnée de manière à définir une rainure dans laquelle un chariot (700) est logé de manière coulissante auquel une extrémité d'une tige d'attache horizontale (701) est contrainte, l'autre extrémité de ladite tige d'attache horizontale (701) étant contrainte avec le harnais dorsal respectif (7).
